# EUROPÄISCHE PATENTSCHRIFT

(11) **EP 1 442 288 B1**
(45) Veröffentlichungstag und Bekanntmachung des Hinweises auf die Patenterteilung: **14.03.2007**
(21) Anmeldenummer: 02801887.7
(22) Anmeldetag: 12.10.2002
(51) Int. Cl.: G01N 27/403

(54) **VORRICHTUNG ZUR BESTIMMUNG UND/ODER ÜBERWACHUNG DES PH-WERTES EINES MEDIUMS**
DEVICE FOR DETERMINING AND/OR MONITORING THE PH OF A MEDIUM
DISPOSITIF POUR DETERMINER ET/OU SURVEILLER LE PH D'UN MILIEU

(30) Priorität: 24.10.2001 DE 10151867
(43) Veröffentlichungstag der Anmeldung: 04.08.2004
(73) Patentinhaber: Endress + Hauser Conducta Mess- und Regeltechnik GmbH + Co., 70839 Gerlingen (DE)
(72) Erfinder: PECHSTEIN, Torsten, 01445 Radebeul (DE); SCHOLZ, Katrin, 09627 Bobritzsch (DE); FRANZHELD, Rainer, 04736 Waldheim (DE)
(74) Vertreter: Andres, Angelika Maria
(86) Internationale Anmeldenummer: PCT/EP2002/011441
(87) Internationale Veröffentlichungsnummer: WO 2003/036283

(56) Entgegenhaltungen:
- EP-A- 0 351 516
- DE-A- 19 546 266
- US-A1- 2001 008 210
- VIBET C: "Floating the data acquisition chains to improve the quality of measurements" ISA TRANSACTIONS, INSTRUMENT SOCIETY OF AMERICA. PITTSBURGH, US, Bd. 39, Nr. 3, Juli 2000 (2000-07), Seiten 287-291, XP004216828 ISSN: 0019-0578

## Beschreibung

Die Erfindung bezieht sich auf eine Vorrichtung zur Bestimmung und/oder Überwachung des pH-Wertes eines Mediums in einem Behälter durch Messung der Potentialdifferenz zwischen einer pH-Halbzelle und einer Referenzhalbzelle.

Ein pH-Sensor besteht in der Regel aus einer pH-Halbzelle und einer Referenzhalbzelle. Die Spannung, die sich zwischen den beiden Halbzellen ausbildet, dient als Maß für den pH-Wert bzw. für die lonenkonzentration des Mediums. Die Grundlagen der pH-Meßtechnik und der Aufbau von pH-Sensoren sind beispielsweise aus dem Buch "Abwasser- Meß- und Regeltechnik", Hrsg: Endress+Hauser GmbH + Co., 2. Auflage, S. 81 ff. beschrieben.

Der pH-Sensor wird üblicherweise in eine Behälterwand eingebaut. Beispielsweise wird er in eine Rohrleitung eingebaut und nachfolgend von dem zu messenden/zu überwachenden Medium umströmt. Probleme hinsichtlich der Meßgenauigkeit und der Verläßlichkeit der pH-Messung zeigen sich insbesondere dann, wenn die Leitfähigkeit des Mediums kleiner als 100 µS/cm ist. So hat Trinkwasser eine Leitfähigkeit von 100 µS/cm. Die Leitfähigkeit von destilliertem Wasser, wie es in Reinstwasseranwendungen verwendet wird, liegt zwischen 1-10 µS/cm. Bei der Bestimmung des pH-Wertes in Medien mit geringer Leitfähigkeit wird die Meßgenauigkeit infolge von Rauschsignalen, die den Meßsignalen überlagert sind, erheblich herabgesetzt. Wie Versuchsreihen zeigen, sind die Rauschsignale um so größer je geringer die Leitfähigkeit und je höher die Strömungsgeschwindigkeit des Mediums ist. Besonders hoch ist der Rauschanteil, wenn die pH-Messung mittels eines pH-Sensors durchgeführt wird, der in eine Durchflußarmatur aus Kunststoff eingebaut ist.

Die Rauschsignale lassen sich durch elektrostatische Vorgänge in der Umgebung des pH-Sensors erklären. Macht man eine Momentaufnahme, so wird die Referenzhalbzelle bzw. das Diaphragma (die Membran) beispielsweise von einem durch elektrostatische Aufladungen verursachten Potential *ϕ*₁ gestreift. Gleichzeitig wird die pH-Halbzelle von einem Potential *ϕ₂* tangiert. Die Potentialdifferenz ϕ₁- ϕ*₂* überlagert sich der pH-Messung als Rauschsignal. Die Potentiale ϕ₁, ϕ₂ sind darüber hinaus orts- und zeit-invariant. Auch können die Rauschsignale die Meßsignale, die den pH-Wert repräsentieren, um ein Vielfaches übersteigen. Damit ist eine verläßliche Messung des pH-Wertes des Mediums quasi unmöglich.

Bislang versuchte man diesem Problem dadurch zu begegnen, daß bei pH-Sensoren, die in Medien mit geringer Leitfähigkeit eingesetzt werden, nieder ohmige Membrangläser und Referenzhalbzellen mit einem hohem Elektrolytausfluß verwendet werden. Diese Maßnahmen sind nicht besonders wirkungsvoll, da hierdurch der Rauschanteil natürlich nicht geschmälert wird. Zudem ist bei pH-Messungen in Medien mit geringer Leitfähigkeit, also mit einer geringen lonenkonzentration, ein pH-Sensor mit einem hohen Elektrolytausfluß nicht gerade erwünscht Die Problematik ist in dem Buch 'pH-Messung: Grundlagen, Methoden, Anwendungen, Geräte' von Helmut Galster, VCH-Verlag, Weinheim, 1990 dargelegt
Aus der EP 0 351 516 ist ein System zur schnellen Bestimmung der Konzentration einer Komponente eines Mediums bekannt geworden. Insbesondere kommen bei dem System mehrere vorkalibrierte, austauschbare elektrochemische Typen von Sensoren zum Einsatz. Ein Typ von Sensoren besteht aus einer Meßelektrode, einer Referenzelektrode, einer Temperaturkompensation, einer Abschirmung und einer Einheit, die die Daten sammelt. Bei der Abschirmung handelt es sich um eine Art Farraday-Käfig, der die Meßelektrode umgibt. Die Abschirmung ist von der Meßelektrode elektrisch isoliert und elektrisch mit der Referenzelektrode oder mit Erde verbunden.

Der Erfindung liegt die Aufgabe zugrunde, eine Vorrichtung vorzuschlagen, die selbst bei geringer Leitfähigkeit des Mediums noch eine zuverlässige pH-Wert-Messung ermöglicht.

Die Aufgabe wird dadurch gelöst, daß eine Abschirmung aus einem elektrisch leitenden Material vorgesehen ist, wobei die Abschirmung so ausgestaltet und/oder bezüglich der pH-Halbzelle und der Referenzhalbzelle so angeordnet ist, daß sie eine floatende Äquipotentialfläche darstellt, die das am Meßort herrschende Potential P annimmt, und daß sich äußere Störpotentiale den beiden Halbzellen im wesentlichen gleichwertig und gleichsinnig überlagern.

Mit anderen Worten ausgedrückt: Das wesentliche Merkmal der Erfindung besteht darin, in der Nähe der Referenzhalbzelle und der pH-Halbzelle eine Äquipotentialfläche zu schaffen, welche dafür sorgt, daß die beiden Halbzellen nicht durch unterschiedliche elektrostatische Potentiale ϕ₁, ϕ₂ tangiert werden. Zwar ist es aus dem Stand der Technik bereits bekannt, eine als Äquipotentialfläche ausgebildete Abschirmung zu verwenden, die auf einem vorgegebenen Potential, z. B. auf Masse liegt. Diese Ausgestaltung hat jedoch den Nachteil, daß die Äquipotentialfläche elektrisch kontaktiert werden muß, was einen zusätzlichen Aufwand erfordert. Darüber hinaus liegt die Abschirmung bei der vorliegenden Erfindung nicht auf einem vorgegebenen Potential, sondern sie paßt sich den am Meßort herrschenden Bedingungen an - sie kann also frei floaten. Mit anderen Worten: die Abschirmung ist potentialmäßig nicht festgelegt.

Zusammengefaßt zeichnet sich die erfindungsgemäße Lösung durch die folgenden Vorteile aus:
- hohe Signalstabilität und vermindertes Rauschen und folglich eine wirkungsvolle Beseitigung der Probleme bei der pH-Messung in Medien mit einer geringen Leitfähigkeit, selbst dann wenn Durchflußarmaturen aus Kunststoff verwendet werden;
- einfache Installation des pH-Sensors, z. B. mittels einer Kunststoffarmatur;
- Einsparung der elektrischen Kontaktierung der Äquipotentialfläche;
- kostengünstige Lösung.

Gemäß einer vorteilhaften Weiterbildung ist der erfindungsgemäße pH-Sensor symmetrisch aufgebaut: Entweder ist die pH-Halbzelle konzentrisch um die Referenzhalbzelle angeordnet, oder die Referenzhalbzelle ist konzentrisch um die pH-Halbzelle angeordnet. Weiterhin wird es als vorteilhaft angesehen, wenn die Referenzhalbzelle und die pH-Halbzelle räumlich eng beieinander liegen. Der Vorteil des symmetrischen Aufbaus des pH-Sensors liegt darin, daß nahezu keine richtungs- oder einbaubedingte Meßwertänderungen auftreten. Diese Unabhängigkeit von den äußeren Parametern wird durch die nachfolgend genannte Weiterbildung der erfindungsgemäßen Vorrichtung noch verstärkt.

Gemäß dieser vorteilhafte Weiterbildung ist die pH-Halbzelle als Flachmembran ausgebildet. Die Ausbildung der Glaselektrode als Flachmembran hat gegenüber anderen Ausgestaltungen den Vorteil, daß bei Messungen in strömenden Medien hier ein im wesentliches laminares Strömungsverhalten auftritt.

Einem symmetrischen Aufbau des pH-Sensors mit allen zuvor beschriebenen Vorteilen wird weiterhin dadurch Rechnung getragen, daß die Referenzhalbzelle ein im wesentlichen ringförmiges bzw. symmetrisch angeordnetes Diaphragma (eine Membran) aufweist, welches konzentrisch um die pH-Halbzelle angeordnet ist.

Eine bevorzugte Ausgestaltung der erfindungsgemäßen Vorrichtung schlägt vor, daß der pH-Sensor über eine Armatur an dem Behälter bzw. in der von dem Medium durchströmten Rohrleitung befestigt ist. Bevorzugt ist die Armatur aus Kunststoff gefertigt, wodurch ein sehr kostengünstiger Einbau des pH-Sensors möglich wird.

Grundgedanke der erfindungsgemäßen Lösung ist es, dem pH-Sensor eine floatende Äquipotentialfläche zuzuordnen, die dafür Sorge trägt, daß äußere Störpotentiale, die im wesentlichen von elektrostatischen Aufladungen in der Umgebung der Membran und des Diaphragmas herrühren, sich den beiden Halbzellen im wesentlichen gleichwertig und gleichsinnig überlagern. Gemäß einer bevorzugten Ausgestaltung der erfindungsgemäßen Vorrichtung besteht die Abschirmung, die die Äquipotentialfiläche definiert, aus einem Drahtgeflecht. Selbstverständlich kann es sich bei der Abschirmung auch um zumindest einen Draht oder um zumindest eine Platte aus einem elektrisch leitenden Material handeln.

Bevorzugt weist die Abschirmung die Form eines Bechers aufweist, wobei die becherförmige Abschirmung über die pH-Halbzelle und das Diaphragma gestülpt ist.

Die Erfindung wird anhand der nachfolgenden Zeichnungen näher erläutert. Es zeigt:
- Fig. 1:: eine schematische Darstellung eines bekannten pH-Sensors,
- Fig. 2:: eine schematische Darstellung einer bevorzugten Ausführungsform des erfindungsgemäßen pH-Sensors und
- Fig. 3:: einen Querschnitt gemäß der Kennzeichnung III-III in Fig. 2.

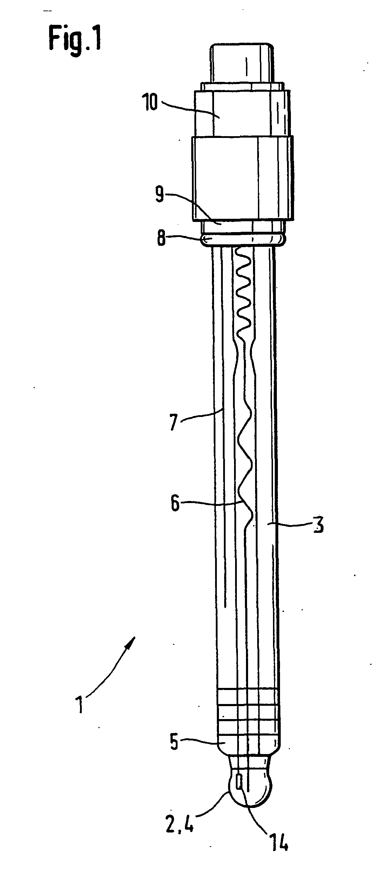

Fig. 1 zeigt eine schematische Darstellung eines bekannten pH-Sensors 1. Der pH-Sensor 1 ist mechanisch gesehen symmetrisch aufgebaut: die Referenzhalbzelle 3 ist konzentrisch um die pH-Halbzelle 2 angeordnet. Die pH-Halbzelle 2 ist als Kugelmembran 4 ausgeführt. Das Diaphragma 5 ist ringförmig ausgebildet und in der unmittelbaren Umgebung zu der pH-Halbzelle 2 zu finden. Durch diesen symmetrisch Aufbau läßt sich eine hohe Meßgenauigkeit erreichen.

Das elektrochemische Ableitsystem 6, 7 besteht übrigens bevorzugt aus einem Silber/Silberchlorid-System. Der Temperaturfühler 14, bei dem es sich beispielsweise um ein PT-100 handelt, dient zur Temperaturkompensation des gemessenen pH-Wertes.

Als Prozeßanschluß wird im gezeigten Fall der Elektrodensteckkopf 10 verwendet. Auf den Elektrodensteckkopf 10 wird ein Koaxkabel aufgeschraubt, über das die Verbindung zu dem in der Fig. 1 nicht gesondert dargestellten pH-Meßumformer hergestellt wird. Ein Meßumformer, der hier zum Einsatz kommen kann, wird von der Anmelderin hergestellt und unter der Bezeichnung Mycom vertrieben.

Die Befestigung des pH-Sensors 1 an dem Behälter, z. B. in der Rohrleitung, erfolgt über eine Wechselarmatur. Wechselarmaturen sind aus dem Stand der Technik vielfältig bekannt. Bevorzugt besteht die Armatur, die im Zusammenhang mit der vorliegenden Erfindung zum Einsatz kommt, aus Kunststoff. Entsprechende Armaturen werden z. B. von der Anmelderin unter der Bezeichnung Probfit, Cleanfit, usw. hergestellt und vertrieben.

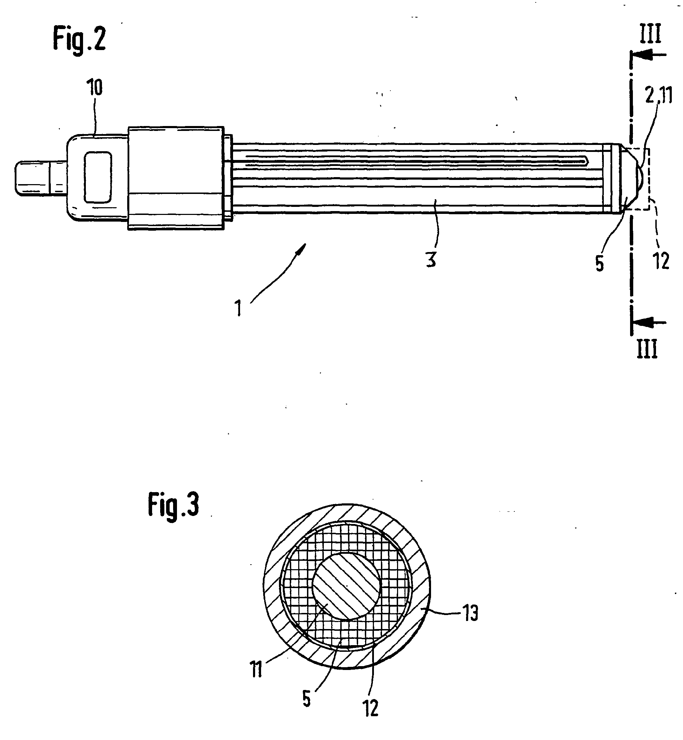

Fig. 2 zeigt eine schematische Darstellung einer bevorzugten Ausführungsform des erfindungsgemäßen pH-Sensors 1. In Fig. 3 ist ein Querschnitt gemäß der Kennzeichnung III-III in Fig. 2. zu sehen. Wiederum handelt es sich bei dem pH-Sensor 1 um eine pH-Kombielektrode. Die Referenzhalbzelle 3 mit einem Ringdiaphragma 5 ist konzentrisch um die pH-Halbzelle 2 angeordnet. Die pH-Halbzelle 2 ist als Flachmembran 11 ausgeführt. Über die Flachmembran 11 und das Diaphragma 5 ist ein becherförmig ausgebildetes Schirmgeflecht aus einem leitfähigen Material gestülpt. Dieses Schirmgeflecht bildet die Abschirmung 12, die erfindungsgemäß eine Äquipotentialfläche definiert und sicherstellt, daß sich äußere Störpotentiale den beiden Halbzellen im wesentlichen gleichwertig und gleichsinnig überlagern. Hierdurch wird der Rauschanteil, der von elektrostatischen Potentialen unterschiedlicher Stärke an den beiden Halbzellen 2, 3 herrührt, unterdrückt, was sich in einer hohen Stabilität der Meßsignale wiederspiegelt, die den pH-Wert des Mediums repräsentieren.

Wie bereits an vorhergehender Stelle erwähnt, stellt die Abschirmung 12 aus dem leitfähigen Material eine floatende Äquipotentialfläche dar: Sie ist nicht auf einem konstanten Potential, z. B. auf Masse, sondern sie nimmt immer das Potential an, das momentan am Meßort herrscht. Da sich das Potential beiden Halbzellen 2, 3 gleichsinnig und gleichwertig überlagert, spielt es keine Rolle, ob das Potential an der Abschirmung 12 konstant ist oder nicht, da letztlich für die pH-Messung nur die zwischen den beiden Halbzellen 2, 3 gemessene Potentialdifferenz herangezogen wird.

Die Abschirmung 12 kann, wie bereits oben erwähnt, als becherförmiges Drahtgeflecht ausgebildet sein. Prinzipiell ist es auch möglich, als Abschirmung 12 zumindest einen Draht oder eine Platte aus einem elektrisch leitenden Material zu verwenden. Die Abschirmung 12 kann auf jede mögliche Art und Weise an dem pH-Sensor 1 befestigt sein. Beispielsweise ist sie, wie in den Figuren Fig. 2 und Fig. 3 zu sehen ist, zwischen dem Außenrohr der nicht gesondert dargestellten Armatur und dem pH-Sensor 1 eingeklemmt. Selbstverständlich könnte die Abschirmung 12 auch an den pH-Sensor 1 angeklebt werden.

## Patentansprüche

1. Vorrichtung zur Bestimmung und/oder Überwachung des pH-Wertes eines Mediums in einem Behälter durch Messung der Potentialdifferenz zwischen einer pH-Halbzelle (2) und einer Referenzhalbzelle (3),
wobei eine Abschirmung (12) aus einem elektrisch leitenden Material vorgesehen ist, **dadurch gekennzeichnet, daß**
die Abschirmung (12) so ausgestaltet und/oder bezüglich der pH-Halbzelle (2) und der Referenzhalbzelle (3) so angeordnet ist, daß sie eine floatende Äquipotentialfläche darstellt, die das am Meßort herrschende Potential P annimmt, und daß sich äußere Störpotentiale den beiden Halbzellen (2, 3) im wesentlichen gleichwertig und gleichsinnig überlagern.

2. Vorrichtung nach Anspruch 1,
wobei die pH-Halbzelle (2) konzentrisch um die Referenzhalbzelle (3) angeordnet ist.

3. Vorrichtung nach Anspruch 1,
wobei die Referenzhalbzelle (3) konzentrisch um die pH-Halbzelle (2) angeordnet ist.

4. Vorrichtung nach Anspruch 2 oder 3,
wobei die pH-Halbzelle (2) als Flachmembran (11) ausgeführt ist.

5. Vorrichtung nach Anspruch 2 oder 3,
wobei die Referenzhalbzelle (3) ein im wesentlichen ringförmiges bzw. symmetrisch angeordnetes Diaphragma (5) aufweist, welches konzentrisch um die pH-Halbzelle (2) angeordnet ist.

6. Vorrichtung nach einem oder mehreren der vorhergehenden Ansprüche,
wobei eine Armatur vorgesehen ist, über die der pH-Sensor (1) an einem Behälter befestigt ist.

7. Vorrichtung nach Anspruch 5,
wobei die Armatur aus Kunststoff gefertigt ist.

8. Vorrichtung nach Anspruch 1,
wobei es sich bei der Abschirmung (12) um ein Drahtgeflecht handelt.

9. Vorrichtung nach Anspruch 1,
wobei es sich bei der Abschirmung (12) um zumindest einen Draht oder um zumindest eine Platte aus einem elektrisch leitenden Material handelt.

10. Vorrichtung nach Anspruch 4, 8 oder 9,
wobei die Abschirmung (12) die Form eines Bechers aufweist und über die pH-Halbzelle (2) und das Diaphragma (5) gestülpt ist.

## Claims

1. Device for determining and/or monitoring the pH value of a medium in a container by measuring the potential difference between a pH half-cell (2) and a reference half-cell (3),
a shielding (12) made of an electrically conductive material being provided, **characterised in that** the shielding (12) is so configured and/or so arranged in relation to the pH half-cell (2) and the reference half-cell (3) that it constitutes a floating equipotential surface which assumes the potential P prevailing at the measuring location, and that external interference potentials are superimposed on the two half-cells (2, 3) substantially equivalently and in the same direction.

2. Device according to Claim 1,
the pH half-cell (2) being arranged concentrically around the reference half-cell (3).

3. Device according to Claim 1,
the reference half-cell (3) being arranged concentrically around the pH half-cell (2).

4. Device according to Claim 2 or 3,
the pH half-cell (2) being designed as a flat membrane (11).

5. Device according to Claim 2 or 3,
the reference half-cell (3) having a substantially annular or symmetrically arranged diaphragm (5) arranged concentrically around the pH half-cell (2).

6. Device according to one or more of the preceding claims,
a fitting being provided, via which the pH sensor (1) is fastened to a container.

7. Device according to Claim 5,
the fitting being produced from plastic.

8. Device according to Claim 1,
the shielding (12) being a wire mesh.

9. Device according to Claim 1,
the shielding (12) being at least one wire or at least one plate made of an electrically conductive material.

10. Device according to Claim 4, 8 or 9,
the shielding (12) having the shape of a cup and being placed over the pH half-cell (2) and the diaphragm (5).

## Revendications

1. Dispositif destiné à la détermination et/ou la surveillance du pH d'un produit au sein d'un réservoir en mesurant la différence de potentiel entre une demi-cellule de pH (2) et une demi-cellule de référence (3),
un blindage (12) en un matériau électroconducteur étant prévu, **caractérisé en ce que** le blindage (12) est conçu et/ou disposé par rapport à la demi-cellule de pH (2) et la demi-cellule de référence (3) de telle sorte qu'il constitue une surface équipotentielle flottante, qui adopte le potentiel P régnant sur le point de mesure, et que les potentiels parasites extérieurs se superposent pour l'essentiel aux deux demi-cellules (2, 3) selon une même valeur et un même sens.

2. Dispositif selon la revendication 1,
pour lequel la demi-cellule de pH (2) est disposée de façon concentrique autour de la demi-cellule de référence (3).

3. Dispositif selon la revendication 1,
pour lequel la demi-cellule de référence (3) est disposée de façon concentrique autour de la demi-cellule de pH (2).

4. Dispositif selon la revendication 2 ou 3,
pour lequel la demi-cellule de pH (2) est exécutée en tant que membrane plate (11).

5. Dispositif selon la revendication 2 ou 3,
pour lequel la demi-cellule de référence (3) est un diaphragme (5) pour l'essentiel annulaire ou disposé de façon symétrique, lequel est disposé de façon concentrique autour de la demi-cellule de pH (2).

6. Dispositif selon une ou plusieurs des revendications précédentes,
pour lequel est prévu une sonde, par l'intermédiaire de laquelle l'électrode pH (1) est fixée sur un réservoir.

7. Dispositif selon la revendication 5,
pour lequel la sonde est fabriquée en matière plastique.

8. Dispositif selon la revendication 1,
pour lequel il s'agit d'un treillis métallique concernant le blindage (12).

9. Dispositif selon la revendication 1,
pour lequel, concernant le blindage (12), il s'agit au minimum d'un fil métallique ou au minimum d'une plaque constitué(e) d'un matériau électroconducteur.

10. Dispositif selon la revendication 4, 8 ou 9,
pour lequel le blindage (12) a la forme d'un godet et est placé sur la demi-cellule de pH (2) et le diaphragme (5).
